# EUROPEAN PATENT APPLICATION

(11) **EP 4 804 113 A1**
(43) Date of publication of application: **09.09.2026**
(21) Application number: 24885216.2
(22) Date of filing: 03.06.2024
(51) Int. Cl.: G06Q 50/22

(54) **WORK ESTIMATION METHOD, INFORMATION PROCESSING DEVICE, AND PROGRAM**

(30) Priority: 31.10.2023 JP 2023187190
(71) Applicant: National Institute of Advanced Industrial Science and Technology, Chiyoda-ku Tokyo 100-8921 (JP)
(72) Inventor: OGISO, Satoki, Tsukuba-shi, Ibaraki 305-8561 (JP); OKUMA, Takashi, Tsukuba-shi, Ibaraki 305-8561 (JP); ICHIKARI, Ryosuke, Tsukuba-shi, Ibaraki 305-8561 (JP); MIWA, Hiroyasu, Tsukuba-shi, Ibaraki 305-8561 (JP); YOSHIDA, Yasuyuki, Tsukuba-shi, Ibaraki 305-8561 (JP)
(74) Representative: Scott, Stephen John
(86) International application number: PCT/JP2024/020245
(87) International publication number: WO 2025/094438

(57) **Abstract**

A task estimation method to be executed by an information processing apparatus (10) includes acquiring environmental information related to task content for a staff member, estimating a task content candidate based on the environmental information, and presenting the task content candidate. The environmental information includes a data set related to positional information on a facility floor plan, posture information for the staff member, and time information.

## Description

### CROSS-REFERENCE TO RELATED APPLICATION

The present application claims priority to Japanese Patent Application No. 2023-187190 filed on October 31, 2023, the entire contents of which are incorporated herein by reference.

### TECHNICAL FIELD

The present disclosure relates to a task estimation method, an information processing apparatus, and a program.

### BACKGROUND

Techniques for compiling task content for a staff member are known. For example, Patent Literature (PTL) 1 discloses a method of dividing a task area where staff members move into small task sections, and recording and compiling task content by combining the names of tasks with the names of the small task sections.

### CITATION LIST

### Patent Literature

PTL 1: JP 2003-280726 A

### SUMMARY

### (Technical Problem)

Conventional techniques record the names of tasks in combination with the names of small task sections, making it easy to compile the task content and task time when staff members perform a plurality of tasks while moving around a large work area. However, the task of recording the location of performed tasks and the task content, along with the time, for each staff member is assumed to be performed manually by a user, and insufficient consideration has been given to estimating the task content. Techniques used to estimate tasks by staff members thus have room for improvement.

In light of these circumstances, it is an aim of the present disclosure to improve techniques for estimating tasks by staff members.

### (Solution to Problem)

(1) A task estimation method according to an embodiment of the present disclosure is a task estimation method to be executed by an information processing apparatus, the task estimation method comprising:
   acquiring environmental information related to task content for a staff member;
   estimating a task content candidate based on the environmental information; and
   presenting the task content candidate, wherein
   the environmental information includes a data set related to positional information on a facility floor plan, posture information for the staff member, and time information.
(2) A task estimation method according to an embodiment of the present disclosure is the task estimation method according to (1), wherein
   the environmental information further includes an environmental sounds.
(3) A task estimation method according to an embodiment of the present disclosure is the task estimation method according to (1) or (2), wherein
   the environmental sounds includes at least one of a sound of a door opening or closing, a sound of running water, a sound of washing dishes, a sound of a device being operated or operating, a sound of moving a wheelchair, a sound of staff members conversing, a sound of shoes, and a sound of footsteps.
(4) A task estimation method according to an embodiment of the present disclosure is the task estimation method according to any one of (1) to (3), wherein
   the environmental information further includes illuminance.
(5) A task estimation method according to an embodiment of the present disclosure is the task estimation method according to any one of (1) to (4), wherein
   the environmental information further includes a landscape.
(6) An information processing apparatus according to an embodiment of the present disclosure is an information processing apparatus comprising a processor, wherein
   the processor is configured to execute the task estimation method according to any one of (1) to (5).
(7) A program according to an embodiment of the present disclosure is
   a program to be executed by an information processing apparatus and configured to cause a computer to execute the task estimation method according to any one of (1) to (5).

### (Advantageous Effect)

The task estimation method, information processing apparatus, and program according to embodiments of the present disclosure can improve techniques for estimating tasks by staff members.

### BRIEF DESCRIPTION OF THE DRAWINGS

In the accompanying drawings:
FIG. 1 is a block diagram illustrating a schematic configuration of an information processing apparatus that executes a task estimation technique according to an embodiment of the present disclosure;
FIG. 2 is a flowchart illustrating a task estimation method according to an embodiment of the present disclosure;
FIG. 3 is a flowchart illustrating an example of a procedure for generating a learning model for estimating task content in a task estimation method according to an embodiment of the present disclosure; and
FIG. 4 is a diagram illustrating an example of a hierarchical structure of task contents.

### DETAILED DESCRIPTION

Hereinafter, a task estimation technique according to an embodiment of the present disclosure will be described with reference to the drawings.

In each drawing, identical or equivalent parts are labeled with the same reference numeral. In the description of the present embodiment, a description of identical or equivalent parts will be omitted or simplified as appropriate.

First, an outline of the present embodiment will be described. The task estimation technique according to an embodiment of the present disclosure is executed by an information processing apparatus 10. The task estimation technique according to an embodiment of the present disclosure can be used in, for example, settings such as caregiving, nursing, and medical treatment. The tasks at these sites are expected to be more diverse and to be more flexible depending on circumstances than the tasks at factories and the like described in PTL 1. The effects of the present disclosure will thus be even more pronounced. Specifically, in the task estimation technique according to an embodiment of the present disclosure, the information processing apparatus 10 can acquire environmental information related to the task content for the staff member and estimate a task content candidate with high accuracy from the environmental information. The estimated task content candidate is presented to a user. The environmental information includes a data set related to positional information on a facility floor plan, posture information for the staff member, and time information.

Here, the term "staff member" refers to those who provide care directly or indirectly to subjects in settings such as caregiving, nursing, and medical treatment. For example, the staff member may be a worker, a care manager, or other manager. Furthermore, the environmental information related to the task content for the staff member refers to all information that can be used to estimate the task content for the staff member. The user refers to a person who checks the task content candidate estimated by the task estimation technique according to an embodiment of the present disclosure. The user may be the actual staff member or another staff member.

In this way, according to the task estimation technique of the present embodiment, the task content of a staff member can be estimated based on environmental information, thereby improving the technique for estimating the task content for staff members.

A configuration according to an embodiment of the present disclosure will be described below.

### (Configuration of information processing apparatus)

Next, each component of the information processing apparatus 10 will be described in detail. The information processing apparatus 10 is any apparatus used by the user. For example, a personal computer, a server computer, a general-purpose electronic device, or a dedicated electronic device can be employed as the information processing apparatus 10.

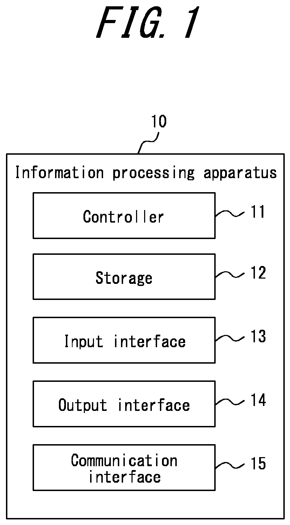

As illustrated in FIG. 1, the information processing apparatus 10 includes a controller 11, a storage 12, an input interface 13, an output interface 14, and a communication interface 15.

The controller 11 includes at least one processor, at least one dedicated circuit, or a combination thereof. The processor is a general-purpose processor such as a central processing unit (CPU) or a graphics processing unit (GPU), or a dedicated processor that is dedicated to specific processing. Examples of dedicated circuits include a field-programmable gate array (FPGA) and an application specific integrated circuit (ASIC). The controller 11 executes processes related to the operation of the information processing apparatus 10 while controlling each component of the information processing apparatus 10.

At least one semiconductor memory, at least one magnetic memory, at least one optical memory, or a combination of at least two of these is included in the storage 12. The semiconductor memory is, for example, a random access memory (RAM) or a read only memory (ROM). The RAM is, for example, static random access memory (SRAM) or dynamic random access memory (DRAM). The ROM is, for example, electrically erasable programmable read only memory (EEPROM). The storage 12 functions as, for example, a main storage device, an auxiliary storage device, or a cache memory. The storage 12 stores data to be used for operations of the information processing apparatus 10 and data obtained by the operations of the information processing apparatus 10.

The input interface 13 includes at least one interface for input. The interface for input is, for example, physical keys, capacitive keys, a pointing device, or a touch screen integrally provided with a display. The interface for input may be, for example, a sound sensor that accepts audio input, a camera that accepts gesture input, or the like. The input interface 13 accepts operations for inputting data used in the operations of the information processing apparatus 10. The input interface 13 may be connected to the information processing apparatus 10 as an external input device instead of being provided within the information processing apparatus 10. The connection method may be any method such as Universal Serial Bus (USB), High-Definition Multimedia Interface (HDMI^{®}), or Bluetooth^{®} (HDMI and Bluetooth are each a registered trademark in Japan, other countries, or both).

The output interface 14 includes at least one interface for output. The interface for output is, for example, a display that outputs information as images. The display is, for example, a liquid crystal display (LCD) or an organic electro luminescent (EL) display. The output interface 14 outputs and displays data obtained through the operations of information processing apparatus 10. The output interface 14 may be connected to the information processing apparatus 10 as an external output device instead of being provided within the information processing apparatus 10. The connection method may be any method such as USB, HDMI^{®}, or Bluetooth^{®}.

The communication interface 15 includes at least one external interface for communication. The interface for communication may be either a wired or wireless interface. In the case of wired communication, the interface for communication is, for example, a local area network (LAN) interface or a Universal Serial Bus (USB). In the case of wireless communication, the interface for communication is, for example, an interface compatible with mobile communication standards such as Long Term Evolution (LTE), 4^{th} generation (4G), or 5^{th} generation (5G), or an interface compatible with short-range wireless communication such as Bluetooth^{®}. The communication interface 15 receives data to be used for the operations of the information processing apparatus 10 and transmits data obtained by the operations of information processing apparatus 10.

The functions of the information processing apparatus 10 are realized by executing a program according to the present embodiment on a processor corresponding to the information processing apparatus 10. That is, the functions of the information processing apparatus 10 can be realized by software. The program causes a computer to execute the operations of the information processing apparatus 10, thereby causing the computer to function as the information processing apparatus 10. That is, the computer functions as the information processing apparatus 10 by executing the operations of the information processing apparatus 10 in accordance with the program.

In the present embodiment, the program can be recorded on a computer readable recording medium. The computer readable recording medium includes a non-transitory computer readable medium, such as a magnetic recording device, an optical disk, a magneto-optical recording medium, or a semiconductor memory. The program is distributed by, for example, selling, transferring, or lending a portable recording medium, such as a digital versatile disc (DVD) or a compact disc read only memory (CD-ROM), on which the program is recorded. The program may also be distributed by storing the program in the storage of an external server and transmitting the program from the external server to other computers. The program may be provided as a program product.

Some or all of the functions of the information processing apparatus 10 may be realized by a dedicated circuit equivalent to the controller 11. That is, some or all of the functions of the information processing apparatus 10 may be realized by the hardware of the information processing apparatus 10 itself.

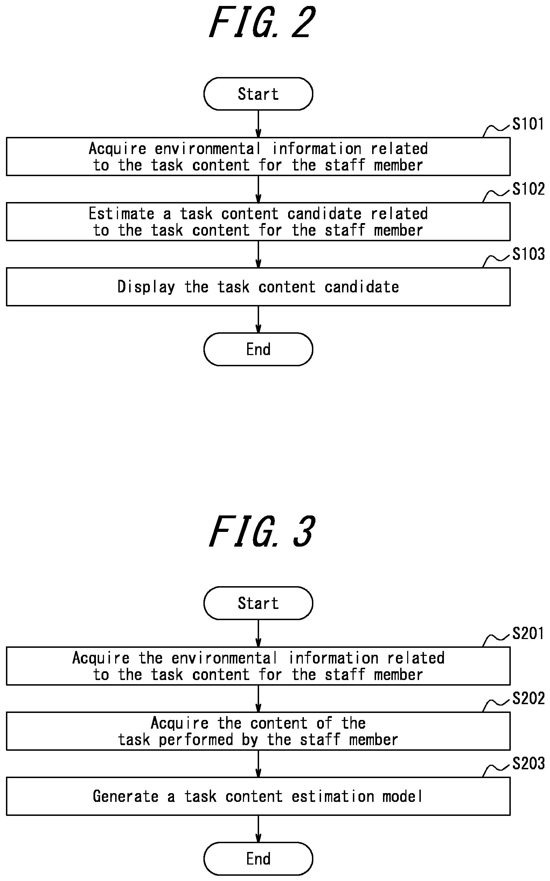

Referring to the flowchart of FIG. 2, a task estimation method according to one embodiment of the present disclosure is illustrated.

Step S101: The controller 11 of the information processing apparatus 10 acquires environmental information related to the task content for the staff member. The controller 11 acquires positional information on the facility floor plan, posture information for the staff member, and time information (hereinafter referred to as "positional information and the like"). The positional information on the facility floor plan can, for example, be obtained over time by observing the position of the staff member via beacons placed in the facility, understanding changes in the walking speed and direction of travel of the staff member using a terminal worn or carried by the staff member, and comparing these pieces of information with information about the facility floor plan. The information about the facility floor plan needs to include information on structurally unwalkable areas, such as the layout of the facility's walls. The facility floor plan may be, for example, a wall map. The information about the facility floor plan may also include semantic information about places where staff members perform specific tasks, such as baths and eating places.

The posture information for the staff member can be grasped from sensing data recognized from a terminal worn or carried by the staff member. The sensing data may include acceleration information, angular velocity information, and magnetic information. In addition, the environmental information may include information that can be obtained from a nurse call system, an excretion sensor, voice information for care record support, IoT vital sign measuring equipment, existing task content estimation software, or the like.

Any method can be used to acquire the environmental information. For example, the controller 11 may acquire environmental sounds, illuminance, a landscape, and the like, in addition to the positional information and the like, via the input interface 13. The controller 11 may also acquire these pieces of environmental information from a terminal worn or carried by the staff member. The terminal worn or carried by the staff member may be a smartphone, which can also be hung around the neck. To improve accuracy, it is preferable to place the device close to the torso, for example by placing it in a chest pocket or by using a smartphone holder around the waist. In addition, the controller 11 may acquire these pieces of environmental information from sensors installed in the facility.

The controller 11 uses such environmental information as explanatory variables. For example, the controller 11 extracts, as explanatory variables, a data set from the past few minutes that is highly relevant to a certain task content. The data set includes at least positional information at a certain time. In other words, the environmental information used by the controller 11 may include a data set related to the positional information on the facility floor plan, the posture information for the staff member, and time information. The amount of data in the data set need only be sufficient to estimate the content of the task that has been carried out up to a certain point in time and is not limited to data from the past few minutes. The data may be from a longer or shorter period of time.

Step S102: The controller 11 estimates a task content candidate related to the task that the staff member has been performing up to that point in time, based on the environmental information. For example, the controller 11 may generate a learning model as illustrated in the flowchart of FIG. 3 and estimate a task content candidate by inputting the environmental information acquired in step S101 into such a learning model. In the case of FIG. 3, the controller 11 acquires the environmental information related to the task content for the staff member as acquired in the past (step S201) and the content of the task performed by the staff member at that time (step S202). The controller 11 generates a task content estimation model using the acquired environmental information and task content as training data (step S203). The learning model may be, for example, a machine learning model constructed based on decision trees. Examples of machine learning models constructed based on decision trees include, but are not limited to, Light GBM and XGBoost. Alternatively, the learning model may be a model generated based on a machine learning algorithm such as a convolutional neural network (CNN), a recurrent neural network (RNN), or other deep learning algorithm.

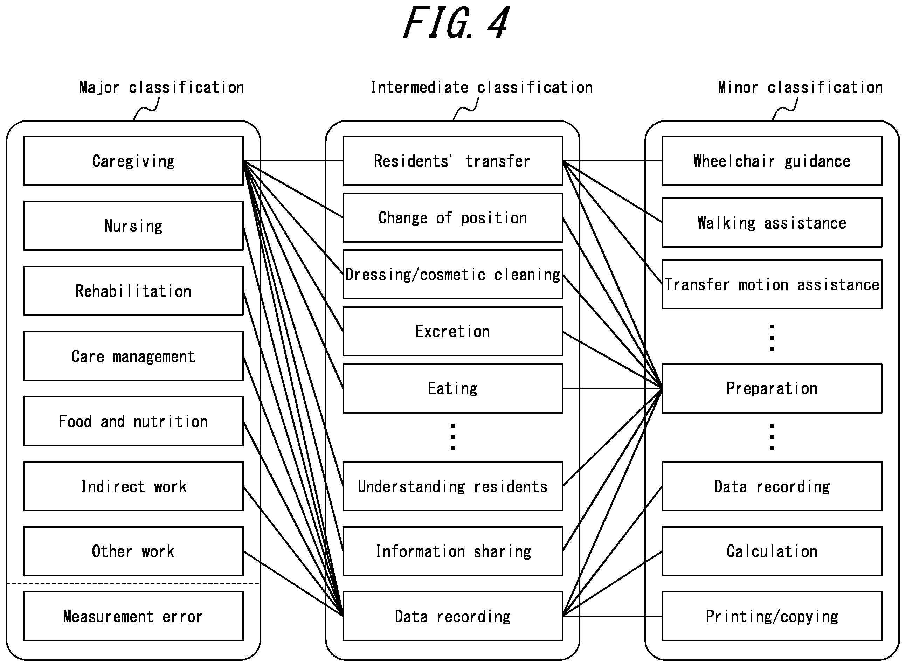

The estimated task content candidate may be selected from a task classification table that classifies the task content into major, intermediate, and minor, for example, according to the granularity of the task content. The task content may be classified into a plurality of hierarchical categories as illustrated in FIG. 4.

In the case of FIG. 4, the task content to be performed by the staff member is divided into three hierarchical levels: major classification, intermediate classification, and minor classification. The major classification may include at least one intermediate classification. The intermediate classification may include at least one minor classification. In other words, the number of categories belonging to the minor classification is the largest, and the number of categories belonging to the intermediate classification is smaller than the number of categories belonging to the minor classification. The number of categories belonging to the major classification is even smaller than the number of categories belonging to the intermediate classification.

The major classification may be categories that classify the tasks performed by staff members by type of service. The major classification may include, for example, caregiving, nursing, rehabilitation, care management, food and nutrition, indirect work, common work, other work, or out of work. The major classification may include measurement error as a category for classification when the task performed by the staff member cannot be classified into any category. The major classification is not limited to these examples and may include various categories.

The intermediate classification may be categories that classify the tasks performed by staff members based on the purpose or circumstances of the task. The intermediate classification may include, for example, wake up/sleep, change of position, dressing/cosmetic cleaning, residents' transfer, excretion, eating, cleanliness, environmental maintenance, laundry, going out, recreation, transportation, medical procedure, management of medicine, measurement of vital signs, clinical examination, and bodywork. It may also include physical therapy, occupational therapy, speech and language therapy, care planning, nutritional management, meal service, hygiene management, employees' transfer, meeting, cleanliness of office, understanding residents or patients, information sharing, data recording, confirmation, visitor facing, other service, other work, and break.

As categories that belong to the major classification of care, the intermediate classification may include, for example, wake up/sleep, change of position, dressing/cosmetic cleaning, residents' transfer, excretion, eating, cleanliness, environmental maintenance, laundry, going out, recreation, or transportation. Categories that belong to the major classification of nursing may include medical procedure, management of medicine, measurement of vital signs, clinical examination, or bodywork. Categories that belong to the major classification of rehabilitation may include physical therapy, occupational therapy, or speech and language therapy. Categories that belong to the major classification of care management may include care planning. Categories that belong to the major classification of food and nutrition may include nutritional management, meal service, or hygiene management. Categories that belong to the major classification of indirect work may include employees' transfer, meeting, and cleanliness of office. Categories that belong to the major classification of common duties may include understanding residents or patients, information sharing, data recording, confirmation, visitor facing, and other service. Categories that belong to the major classification of out of work may include break.

The minor classification may be categories that classify the tasks performed by staff members in greater detail.

As categories that belong to the intermediate classification of wake up/sleep, the minor classification may include, for example, wake up assistance or sleep assistance. Categories that belong to the intermediate classification of change of position may include change of position or seat position adjustment. Categories that belong to the intermediate classification of dressing/cosmetic cleaning may include dressing assistance or cosmetic cleaning assistance. Categories that belong to the intermediate classification of residents' transfer may include wheelchair guidance, walking assistance, transfer motion assistance, or standing assistance. Categories that belong to the intermediate classification of excretion may include excretion assistance, napkin change, or hand-wash assistance. Categories that belong to the intermediate classification of eating may include eating assistance, drinking assistance, delivery of dish, collection of dish, or cooking assistance. Categories that belong to the intermediate classification of cleanliness may include bath assistance, foot bath assistance, face-wash assistance, bed bath, genital wash, oral care, cleaning the ears, nail care, shaving, shampoo, hand-wash assistance, or gargle assistance. Categories that belong to the intermediate classification of environmental maintenance may include sheet change, collection of waste, cleaning up residents' room, confirmation of residents' items, temperature control, humidity conditioning, brightness control, or air ventilation. Categories that belong to the intermediate classification of laundry may include laundry or collection of clothes. Categories that belong to the intermediate classification of going out may include shopping or shopping escort. Categories that belong to the intermediate classification of recreation may include body exercise, oral exercise, music, picture-card show, or cooking. Categories that belong to the intermediate classification of transportation may include transportation or assistance for vehicle ingress/egress.

As categories that belong to the intermediate classification of medical procedure, the minor classification may include, for example, tracheal aspiration, wound care, application of ointment, sterilization, transdermal patch, intravascular pressure monitoring, intravenous infusion, management of gastric fistula, urination management, enema clyster, or oxygen therapy. Categories that belong to the intermediate classification of management of medicine may include oral drug administration, tubal drug administration, drug delivery, ocular instillation, injection, suppository administration, or availability check. Categories that belong to the intermediate classification of measurement of vital signs may include measurement of body temperature, measurement of SpO2, measurement of heart rate, measurement of blood pressure, measurement of body weight, or measurement of vital signs. Categories that belong to the intermediate classification of clinical examination may include attendance at clinical examination or escort to hospital/clinic. Categories that belong to the intermediate classification of bodywork may include massage or functional recovery. Categories that belong to the intermediate classification of physical therapy may include range of motion exercise, heat therapy, gait exercise, standing exercise, stepping exercise, therapeutic exercise, or assistance of physical therapists. Categories that belong to the intermediate classification of occupational therapy may include occupational task, calculation exercise, cognitive exercise, memory exercise, art work exercise, gaming exercise, or assistance of occupational therapists. Categories that belong to the intermediate classification of speech and language therapy may include speech exercise, auditory comprehensive exercise, swallowing test, indirect swallowing exercise, or direct swallowing exercise. Categories that belong to the intermediate classification of care planning may include care planning, conference, monitoring, or assessment. Categories that belong to the intermediate classification of nutritional management may include nutritional care planning, conference, monitoring, assessment of nutritional care, screening of nutritional care, or consultation of food and nutrition. Categories that belong to the intermediate classification of meal service may include meal menu planning, cooking, counting meal set, or procurement of ingredient. Categories that belong to the intermediate classification of hygiene management may include physical condition management, food management, or equipment management.

Categories that belong to the intermediate classification of staff members' transfer may include staff members' transfer, waiting, or conveyance. Categories that belong to the intermediate classification of meeting may include morning meeting, evening meeting, or meeting. Categories that belong to the intermediate classification of cleanliness of office may include cleaning up common space or arrangement.

As categories that belong to the intermediate classification of understanding residents or patients, the minor classification may include communicate care, active listening, observation, confirmation of residents' circumstances, or response to nurse call. Categories that belong to the intermediate classification of information sharing may include oral information sharing, handing-over, calling, or sending and receiving faxes. Categories that belong to the intermediate classification of data recording may include data recording, calculation, or printing/copying. Categories that belong to the intermediate classification of confirmation may include data confirmation, task confirmation, or equipment confirmation. Categories that belong to the intermediate classification of visitor facing may include family facing or visitor facing.

As common tasks, the minor classification may include preparation or hand-wash.

Step S103: The controller 11 displays and outputs a user interface screen, including the task content candidate estimated in step S102, on the output interface 14 to present the user interface screen to the user. For example, the controller 11 may output the task content candidate together with an estimated likelihood and present these to the user. If the user is the actual staff member, the presentation destination may be a terminal worn or carried by the staff member. If the user is someone other than the staff member, the presentation destination may be a terminal used by that person.

In this way, the task estimation technique according to the present embodiment estimates a task content candidate as the content of the task that the staff member has been performing up to that point in time based on environmental information related to the task content for the staff member, and presents the task content candidate to the user. According to the task estimation technique of the present embodiment, the task content candidate can thus be estimated, thereby improving the technique for estimating the task content for staff members.

The controller 11 may acquire environmental sound as the environmental information in addition to the positional information and the like. The environmental sounds refers to any sound that can be heard in the area where staff members work. The environmental sounds may, for example, include at least one of a sound of a door opening or closing, a sound of running water, a sound of washing dishes, a sound of a device being operated or operating, a sound of moving a wheelchair, a sound of staff members conversing, a sound of shoes, and a sound of footsteps. The sound of a door opening or closing may include the sound of turning a doorknob or lever handle, the sound of the door hitting the jamb, and the like. The sound of running water may include the sound of turning on a faucet, the sound of water hitting the bathroom floor, the sound of water hitting a sink, and the like. The sound of washing dishes may include the sound of dishes hitting each other and the sound of dishes rubbing against each other. The sound of a device being operated or operating may include the sound of commercial electronic devices such as air conditioners, washing machines, vacuum cleaners, and dishwashers being operated, and the sound of such commercial electronic devices operating. The sound of staff members conversing simply needs to be identifiable as some sort of human voice by the controller 11. It is preferable to guarantee an input level that enables recognition of intonation, tempo, duration, and the like. One or more staff members may speak. Furthermore, the staff members who speak may or may not include the staff member for whom the task content is being estimated.

Here, the accuracy of task content estimation can be improved by including the environmental sounds in addition to the positional information and the like as the environmental information. For example, when a staff member vacuums the floor, it is possible to estimate that the task content for the staff member is cleaning based on the characteristics of the staff member's posture, the speed at which the staff member moves, and the like. However, by using the operating sound of a vacuum cleaner as an environmental sound in the estimation, the task content for the staff member can more quickly and accurately be estimated as cleaning. Furthermore, by using the sound of staff members conversing, the task content for the staff member can be estimated as morning meeting, evening meeting, or handing-over.

A certain task content can be grasped at a finer level of granularity by including the environmental sounds in addition to the positional information and the like. For example, if the staff member is located in front of a washing machine, it can be estimated from the positional information that the task content for the staff member is laundry. However, it is difficult to distinguish whether the staff member is about to start doing laundry or has already finished based on positional information and the like alone. In contrast, by using the sound of the washing machine being operated and the subsequent sound of the washing machine operating as an environmental sounds in addition to the positional information and the like, it can be estimated that the staff member has started the laundry. Conversely, if the staff member is located in front of the washing machine, and there is a change in posture information but no sound of the washing machine operating, it can be estimated that the staff member is taking in washed clothes and the like.

Furthermore, by using environmental sounds, the start and end times of a certain task can be grasped more accurately. For example, if a staff member enters or leaves a waste disposal room, it can be assumed from the positional information and the like that the staff member has performed a waste disposal task. In this case, it is possible to determine the time when the staff member moves inside or outside the waste disposal room as the start or end of the task, but it is not always possible for the controller 11 to observe the staff member's positional information and the like accurately. Therefore, by using the sound of a door opening or closing as an environmental sound in addition to the positional information and the like, the start and end times of the task can be determined more accurately.

In this way, by including environmental sounds in addition to the positional information and the like, the environmental information can reinforce information regarding the circumstances of the place where the staff member is located, the content of the task being performed, and the like, and the accuracy and granularity of the task content estimation can be further improved.

Furthermore, the environmental information may include illuminance. Illuminance refers to the degree of brightness in the area where staff member is working. In the example described above, if the sound of a staff member opening a door in the waste disposal room is heard and the illuminance then becomes brighter, for example, it can be estimated with a higher degree of certainty that the staff member has started a waste disposal task. Also, if a staff member is making nighttime rounds at a facility and enters a resident's room, and the illuminance then becomes brighter, it is highly likely that the resident needs some kind of assistance while sleeping. Therefore, subsequent care for the resident, such as assistance for falls, can be estimated with higher accuracy.

The environmental information may also include a landscape. The landscape refers to video information that can be captured by a terminal worn or carried by the staff member. For example, by acquiring video information for the area in front of the staff member with the terminal worn or carried by the staff member and using this information for estimation, information about the staff member's task status can be reinforced, and the accuracy of task content estimation can be further improved.

In addition, the environmental information may include magnetic field information and electric field information. For example, magnetic field information can be useful for determining positional information and posture information and can also be a source of information about whether a washing machine is running.

Furthermore, the controller 11 may, for example, estimate a plurality of task content candidates and output them together with their respective estimated likelihoods for presentation to the user in association with time information in descending order of estimated likelihood. Then, when the user selects one of the plurality of presented task content candidates, the controller 11 may determine the selected task content as the task content for the staff member. If there is no correct option among the presented plurality of task content candidates, the system may accept input of the correct task content.

Furthermore, the task estimation technique according to the present embodiment may retrain the task content estimation model (machine learning model) using information on the task content of the staff member as determined based on feedback from the user as training data. As a result, the accuracy of task content estimation will improve as this technique is used in settings such as care, nursing, and medical treatment, and the task estimation technique will be further improved.

In addition, the controller 11 may analyze or keep statistics on the records of the task content for the staff members and output the results in a visualized form such as a graph.

While the present disclosure has been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each means, each step, or the like can be rearranged without logical inconsistency, and a plurality of means, steps, or the like can be combined into one or divided.

### REFERENCE SIGNS LIST

- 10: Information processing apparatus
- 11: Controller
- 12: Memory
- 13: Input interface
- 14: Output interface
- 15: Communication interface

## Claims

1. A task estimation method to be executed by an information processing apparatus, the task estimation method comprising:
acquiring environmental information related to task content for a staff member;
estimating a task content candidate based on the environmental information; and
presenting the task content candidate, wherein
the environmental information includes a data set related to positional information on a facility floor plan, posture information for the staff member, and time information.

2. The task estimation method according to claim 1, wherein
the environmental information further includes an environmental sounds.

3. The task estimation method according to claim 2, wherein
the environmental sounds includes at least one of a sound of a door opening or closing, a sound of running water, a sound of washing dishes, a sound of a device being operated or operating, a sound of moving a wheelchair, a sound of staff members conversing, a sound of shoes, and a sound of footsteps.

4. The task estimation method according to claim 1, wherein
the environmental information further includes illuminance.

5. The task estimation method according to claim 1, wherein
the environmental information further includes a landscape.

6. An information processing apparatus comprising a processor configured to execute the task estimation method according to any one of claims 1 to 5.

7. A program configured to cause an information processing apparatus to execute the task estimation method according to any one of claims 1 to 5.
